# EUROPEAN PATENT SPECIFICATION

(11) **EP 3 650 428 B1**
(45) Date of publication and mention of the grant of the patent: **29.09.2021**
(21) Application number: 17917029.5
(22) Date of filing: 03.07.2017
(51) Int. Cl.: C05F 11/00, C05F 17/00, C05F 17/10, C05F 17/20, C05F 17/40, C05G 5/20

(54) **METHOD FOR OBTAINING A LIQUID FERTILISER FROM VEGETABLE BIOMASS**
VERFAHREN ZUR GEWINNUNG EINES FLÜSSIGEN DÜNGEMITTELS AUS PFLANZLICHER BIOMASSE
PROCÉDÉ D'OBTENTION D'UN FERTILISANT LIQUIDE À PARTIR DE BIOMASSE VÉGÉTALE

(43) Date of publication of application: 13.05.2020
(73) Proprietor: Fertinagro Biotech, S.L., 44195 Teruel (ES)
(72) Inventor: ATARES REAL, Sergio, 44195 Teruel (ES); ROMERO LOPEZ, Joaquin, 44195 Teruel (ES); SALAET MADORRAN, Ignasi, 44195 Teruel (ES); FERRER GINES, María, 44195 Teruel (ES); NARANJO OLIVERO, Miguel Angel, 44195 Teruel (ES); YANCE CHAVEZ, Tula del Carmen, 44195 Teruel (ES); ALIGUE ALEMANY, Rosa, 44195 Teruel (ES)
(74) Representative: González López-Menchero, Álvaro Luis
(86) International application number: PCT/ES2017/070481
(87) International publication number: WO 2019/008193

(56) References cited:
- EP-A1- 0 726 240
- ES-A1- 2 088 826
- ES-A1- 2 286 917
- ES-A1- 2 286 917
- RU-A- 2010 116 035
- US-A1- 2010 323 890
- US-A1- 2010 323 890

## Description

The present invention relates to a method for obtaining a liquid fertiliser from vegetable biomass, where vegetable biomass is understood to be the vegetable residues, for example of agricultural crops, obtained once the production or growth cycle has finished.

The method of the invention permits the transformation of this solid biomass into a liquid fertiliser solution that can be easily metered, for example via fertigation, thereby revaluing, for example, crop waste that would otherwise be eliminated in incinerators or similar.

At present, there is great interest in vegetable waste management due mainly to intensive agricultural production systems, particularly management focused on an environmentally friendly production model based on reuse rather than disposal.

One of the main problems of these vegetable and fruit residues in the horticultural sector is that the production thereof is highly concentrated in time and, furthermore, the composition thereof does not always facilitate management due to the high moisture content, raffia and wire remnants, etc.

Thus, for example, the production of horticultural crops in greenhouses implies uprooting the crop at the end of the growing season (in May and June) and after the autumn cycle (January to March), if two crop cycles are carried out, which entails the generation of a large amount of vegetable residues that causes management problems in areas with a high concentration of this type of production.

The crop residues generated in greenhouses includes stalks, leaves, damaged fruit that does not fulfil the necessary quality standards or that is not marketed for market reasons and entire plants that are uprooted at the end of the crop cycles. In all cases these residues are green vegetable residues, i.e. generated from crops that are harvested before their senescence, due to which they have specific properties (vegetable residue management strategy in the Andalusian horticultural sector, Regional Ministry of Agriculture, Fishing and Rural Development. Regional Ministry of Environment and Territorial Planning, June 2016):
- they have a high moisture content (up to 60% at the time of removal),
- they have a high salt content and
- they are generally easily biodegradable and generate liquid fractions that are easily leached, causing the contamination of aquifers.

The importance of effective and clean management of these residues is inferred from these features.

One of the ways to reuse this vegetable biomass is so-called green manure. Green manure has many advantages, namely the improvement of the physical properties of the soil, since it improves its structure and enrichment in organic matter, which will decompose and improve its fertility. By way of limitation, the residues must remain in the soil for as long as it takes to decompose. This is not always possible in the transition between two crop cycles in the year, due to the need for quick planting for the spring cycle, nor is it possible in summer, between two growing seasons, since there is not enough time to form the compost in good conditions for its use, which takes between 4 to 6 months (vegetable residue management strategy in the Andalusian horticultural sector, *supra).* Other strategies applied in this context are self-composting, which entails associated drawbacks, for example, lack of space in which to carry it out, and use of livestock waste which, due to the high moisture content that favours rotting and fermentation, is limited in its application *(supra).*

Likewise, document EP0672642, "Method and nutritive composition for intensive bio-production of horticultural plants", describes a nutritive composition for the intensive production of plants containing a biomass resulting from the fermentation of algae together with 0.1-99.9% by weight of a subsidiary material or carrier, for example cellulosic polysaccharides.

US 2009/0282882 A1 relates to a method for converting liquid biomass into a fertiliser product, wherein the method is especially suitable for treating waste biomass that does not include more than 20% of solid materials, wherein the process includes a step of nitrification by means of nitrifying bacteria and a chemical oxidation step in a reactor under acid conditions. EP 0726240 discloses the use of cadaverine and putrescine as synergetic additives in organic fertilisers. ES 2286917 discloses a procedure for obtaining an organic liquid fertilizer rich in humic substances from vegetable compost. RU 2010116035 discloses a process for the production of a concentrate of humic acid from brown coal comprising an ultrasound treatment step.

The present invention provides a simple method for obtaining a liquid fertiliser from vegetable biomass, which, in addition to avoiding the aforementioned drawbacks of conventional vegetable biomass reuse processes, makes it possible to obtain a liquid fertiliser ready to use quickly and efficiently, without needing complicated nitrification and oxidation steps, for example.

To this end, the method of the invention comprises the steps of:
i. drying the biomass until obtaining a dry biomass with a moisture content of less than 5% and grinding it once dry until obtaining an average particle size of less than 50 microns;
ii. preparing a mixture of a wetting agent based on biogenic polyamines (histamine, putrescine, spermidine and cadaverine), a dispersant based on humic substances, an anti-foaming agent and a temperature stabiliser based on a low-molecular-weight glycol;
iii. in a reactor, adding the mixture prepared in ii) and the ground dry biomass together with water and subjecting the mixture obtained to liquid-phase milling until obtaining an average particle size between 2 µm and 10 µm;
iv. subjecting the milled product of step iii) to sonication with ultrasound to ensure a homogeneous size of less than 10 µm and
v. optionally, adjusting the viscosity of the sonicated product, adding a mixture of water with a natural polysaccharide-based thickener and agitating slowly to prevent air bubbles from forming, in order to adjust the desired viscosity.

Thus, as described above, the biomass must firstly be dried, for example in a dryer, to remove the moisture and enable milling, for example using a ball mill, since if the moisture is not removed it is impossible to obtain a homogeneous ground product with an average particle size that is as uniform as possible. Usually, moisture on entering the dryer usually ranges between 30% and 65% and, upon leaving the dryer, must be less than 5%. Likewise, the particle size of the biomass initially ranges between millimetres and centimetres, and milling in this first step makes it possible to obtain an average particle size of less than 50 microns to facilitate the subsequent milling step in the liquid phase.

In step ii), a mixture of a wetting agent based on biogenic polyamines is prepared (histamine, putrescine, spermidine and cadaverine), a dispersant based on humic substances, an anti-foaming agent and a temperature stabiliser based on a low-molecular-weight glycol.

The use of biogenic polyamines as wetting agent in the process of the invention is due mainly to the polycationic nature thereof, which allows them to bond and form complexes with polycationic molecules, such as some proteins, phospholipids and pectins, favouring the wetting of the dry biomass, in addition to their relative effectiveness in delaying plant tissue senescence (Galston, A.W.; Kaur-Shawney, R. 1990. Polyamines in plant physiology. Plant Physiology (United States) v. 94, p. 406 ― 410). This delay in senescence would favour maintaining the properties of the vegetable biomass subjected to the process of the invention and applied as a liquid fertiliser.

In one embodiment of the invention, these biogenic polyamines are obtained according to the method described in international patent application PCT/ES2017/070353.

In this step ii), the mixture also has a dispersant based on humic substances. The addition of humic substances as a dispersing agent is well known and applied in literature (see, for example, "Ácidos húmicos. Formas de extracción y usos" ["Humic acids. Forms of extraction and uses"]. Eng. Irina Pedroso Rodriguez, Dr Felix Juan Domínguez Alonso, University of Matanzas, 2006). Adding this dispersant makes it possible for the mixture to remain homogeneous, preventing the formation of lumps or preventing unmixed biomass residues.

In one embodiment of the invention, these humic substances are obtained according to the method described in international patent application PCT/ES2016/070745.

Although the anti-foaming agent added in this step of the process of the invention is not particularly limited, it is preferably selected from organic anti-foaming agents based on mineral oils, siliconised anti-foaming agents and molecular anti-foaming agents, preferably choosing organic anti-foaming agents due to their low cost. The anti-foaming agent will prevent foam from forming in the subsequent liquid-phase milling step.

Likewise, the temperature stabiliser based on a low-molecular-weight glycol is not particularly limited and can be selected from monoethylene glycol, propylene glycol and diethylene glycol. Preferably, the glycol used is monoethylene glycol. Glycol as a preservation medium against low temperatures makes it possible to control the viscosity of the final product used to maintain the viscosity of the final product and, at low temperatures that give rise to an additional increase in viscosity, fluidity-related problems are prevented.

In step iii) of the process of the invention, the mixture prepared in ii) and the ground dry biomass are added to a reactor together with water and subjected to liquid-phase milling until obtaining an average particle size between 2 µm and 10 µm. Preferably, this step is carried out using horizontal mills in the liquid phase until obtaining the aforementioned particle size.

In step iv), the milled product is subjected to sonication with ultrasound to ensure a homogeneous size of less than 10 µm. Preferably, this sonication is carried out using ultrasound with frequencies higher than 20,000 Hz and may reach up to 510⁸ Hz.

Optionally, once milled and sonicated, water and a polysaccharide-based thickener, such as Xanthan gum or Guar gum, are added to the mixture until achieving the desired viscosity, agitating slowly to prevent air bubbles from forming. Viscosity can be adjusted in accordance with the type of vegetable biomass treated and the fluidity of the product obtained in step iv), and may vary between more than 1 cPs to 10,000 cPs (measured in an aqueous solution at 21°C). Preferably, viscosity is optionally adjusted to facilitate the application of the liquid fertiliser, depending, for example, on the size of the fertigation nozzles used, due to which the amount of thickener will depend on said application.

In one preferred embodiment, the following amounts of components in mass are applied in the process of the invention:

| Component | grams |
|---|---|
| Vegetable biomass | 200-800 |
| Polyamine-based wetting agent | 10-60 |
| Dispersant based on humic substances | 100-50 |
| Glycol (Monoethylene glycol) | 10-30 |
| Anti-foaming agent | 0.2-0.5 |
| Water | up to 1,000 |

### Examples

The method of the invention was applied, obtaining the following fertiliser formulation:

| Component | % (m/m) |
|---|---|
| Vegetable biomass | 30.000 % |
| Polyamines obtained in the process patented by FTN | 10.000 % |
| Humic substances obtained in the patent of FTN | 10.000 % |
| Glycol (e.g.: Monoethylene glycol) | 0.200 % |
| Anti-foaming agent | 0.003 % |
| Thickener | 1% |
| Water | 48.797% |

An assay was carried out whereby the liquid fertiliser was obtained by means of separation by decantation, introducing 100 g of biomass treated in accordance with the method of the invention in a beaker and using a laboratory centrifuge at 1,850 rpm for 10 minutes. After 10 minutes, the height of the decanted biomass in the beaker was measured. By way of control, a mixture with the same amount of biomass and water was used.

The results are shown in the following table:

| | H₀ (mm) | H_{f} (mm) | % decantation (H_{f}/ H₀) |
|---|---|---|---|
| Vegetable biomass in water (30%), control | 55 | 35 | 63.6 |
| Vegetable biomass treated according to the process of the invention (30%) | 55 | 3 | 5.5 |
| H₀ = Height of the liquid in the beaker (mm); H_{f} = Final height of the precipitate | | | |

As follows from the results shown, the vegetable biomass treated in accordance with the method of the invention makes it possible to obtain a fertiliser which is essentially maintained in the liquid phase for the subsequent application thereof.

## Claims

1. A method for obtaining a liquid fertiliser from vegetable biomass, wherein the method comprises the following steps:
i. drying the biomass until obtaining a dry biomass with a moisture content of less than 5% and grinding it once dry until obtaining an average particle size of less than 50 microns;
ii. preparing a mixture of a wetting agent based on biogenic polyamines, histamine, putrescine, spermidine and cadaverine, a dispersant based on humic substances, an anti-foaming agent and a temperature stabiliser based on a low-molecular-weight glycol;
iii. in a reactor, adding the mixture prepared in ii) and the ground dry biomass together with water and subjecting the mixture obtained to liquid-phase milling until obtaining an average particle size between 2 µm and 10 µm; and
iv. subjecting the milled product of step iii) to sonication with ultrasound to ensure a homogeneous size of less than 10 µm.

2. The method for obtaining a liquid fertiliser from vegetable biomass, according to claim 1, which also comprises the step of:
v. adjusting the viscosity of the sonicated product, adding a mixture of water with a natural polysaccharide-based thickener and agitating slowly to prevent air bubbles from forming, in order to adjust the desired viscosity.

3. The method for obtaining a liquid fertiliser from vegetable biomass, according to claims 1 or 2, **characterised in that** the anti-foaming agent is selected from organic anti-foaming agents based on mineral oils, siliconised anti-foaming agents and molecular anti-foaming agents, preferably organic anti-foaming agents.

4. The method for obtaining a liquid fertiliser from vegetable biomass, according to claims 1 or 2, **characterised in that** the low-molecular-weight glycol is selected from monoethylene glycol, propylene glycol and diethylene glycol.

5. The method for obtaining a liquid fertiliser from vegetable biomass, according to claim 4, **characterised in that** the low-molecular-weight glycol is monoethylene glycol.

6. The method for obtaining a liquid fertiliser from vegetable biomass, according to claim 2, **characterised in that** the polysaccharide-based thickener is Xanthan gum or Guar gum.

7. The method for obtaining a liquid fertiliser from vegetable biomass, according to claim 1, **characterised in that** the following components in mass are used: vegetable biomass 200-800 g, polyamine-based wetting agent 10-60 g, dispersant based on humic substances 50-100 g, monoethylene glycol 10-30 g, anti-foaming agent 0.2-0.5 g, water up to 1,000 g.

## Patentansprüche

1. Verfahren zum Erhalten eines Flüssigdüngers aus pflanzlicher Biomasse, wobei das Verfahren die folgenden Schritte umfasst:
i. Trocknen der Biomasse, bis eine trockene Biomasse mit einem Feuchtigkeitsgehalt von weniger als 5 % erhalten wird, und Mahlen nach dem Trocknen, bis eine durchschnittliche Teilchengröße von weniger als 50 Mikrometer erreicht wird;
ii. Herstellen einer Mischung aus einem Netzmittel auf Basis biogener Polyamine, Histamin, Putrescin, Spermidin und Cadaverin, einem Dispergiermittel auf Basis von Huminstoffen, einem Antischaummittel und einem Temperaturstabilisator auf Basis eines niedermolekularen Glykols;
iii. in einem Reaktor, Zugeben der in ii) hergestellten Mischung und der gemahlenen trockenen Biomasse zusammen mit Wasser und Unterziehen der erhaltenen Mischung einer Flüssigphasenmahlung, bis eine durchschnittliche Teilchengröße zwischen 2 µm und 10 µm erhalten wird; und
iv. Beschallen des gemahlenen Produkts von Schritt iii) mit Ultraschall, um eine homogene Größe von weniger als 10 µm sicherzustellen.

2. Verfahren zum Erhalten eines Flüssigdüngers aus pflanzlicher Biomasse nach Anspruch 1, das auch den folgenden Schritt umfasst:
v. Einstellen der Viskosität des beschallten Produkts, Zugabe einer Mischung aus Wasser mit einem natürlichen Verdickungsmittel auf Polysaccharidbasis und langsames Rühren, um die Bildung von Luftblasen zu verhindern, um die gewünschte Viskosität einzustellen.

3. Verfahren zum Erhalten eines Flüssigdüngers aus pflanzlicher Biomasse nach einem der Ansprüche 1 oder 2, **dadurch gekennzeichnet, dass** das Antischaummittel ausgewählt ist aus organischen Antischaummitteln auf Basis von Mineralölen, silikonisierten Antischaummitteln und molekularen Antischaummitteln, vorzugsweise organischen Antischaummitteln.

4. Verfahren zum Erhalten eines Flüssigdüngers aus pflanzlicher Biomasse nach einem der Ansprüche 1 oder 2, **dadurch gekennzeichnet, dass** das niedermolekulare Glykol ausgewählt ist aus Monoethylenglykol, Propylenglykol und Diethylenglykol.

5. Verfahren zum Erhalten eines Flüssigdüngers aus pflanzlicher Biomasse nach Anspruch 4, **dadurch gekennzeichnet, dass** das niedermolekulare Glykol Monoethylenglykol ist.

6. Verfahren zum Erhalten eines Flüssigdüngers aus pflanzlicher Biomasse nach Anspruch 2, **dadurch gekennzeichnet, dass** das Verdickungsmittel auf Polysaccharidbasis Xanthangummi oder Guargummi ist.

7. Verfahren zum Erhalten eines Flüssigdüngers aus pflanzlicher Biomasse nach Anspruch 1, **dadurch gekennzeichnet, dass** die folgenden Bestandteile in Masse verwendet werden: pflanzliche Biomasse 200-800 g, Netzmittel auf Polyaminbasis 10-60 g, Dispergiermittel auf Huminstoffbasis 50-100 g, Monoethylenglykol 10-30 g, Antischaummittel 0,2-0,5 g, Wasser bis 1.000 g.

## Revendications

1. Procédé d'obtention d'un engrais liquide à partir de biomasse végétale, dans lequel le procédé comprend les étapes suivantes :
i. sécher la biomasse jusqu'à obtenir une biomasse sèche avec un taux d'humidité inférieur à 5 % et la broyer une fois sèche jusqu'à obtenir une granulométrie moyenne de moins de 50 microns ;
ii. préparer un mélange d'un agent mouillant à base de polyamines biogènes, d'histamine, de putrescine, de spermidine et de cadavérine, d'un dispersant à base de substances humiques, d'un agent anti-mousse et d'un stabilisateur de température à base d'un glycol de faible poids moléculaire ;
iii. dans un réacteur, ajouter le mélange préparé à ii) et la biomasse sèche broyée avec de l'eau et soumettre le mélange obtenu à une mouture en phase liquide jusqu'à obtenir une granulométrie moyenne comprise entre 2 µm et 10 µm ; et
iv. soumettre le produit moulu de l'étape iii) à une sonication avec des ultrasons pour assurer une taille homogène de moins de 10 µm.

2. Procédé d'obtention d'un engrais liquide à partir de biomasse végétale, selon la revendication 1, qui comprend également l'étape de :
v. ajuster la viscosité du produit soumis à des ultrasons, ajouter un mélange d'eau avec un épaississant naturel à base de polysaccharides et agiter lentement pour éviter la formation de bulles d'air, afin d'ajuster la viscosité souhaitée.

3. Procédé d'obtention d'un engrais liquide à partir de biomasse végétale, selon les revendications 1 ou 2, **caractérisé en ce que** l'agent anti-mousse est choisi parmi les agents anti-mousse organiques à base d'huiles minérales, les agents anti-mousse siliconés et les agents anti-mousse moléculaires, de préférence les agents anti-mousse organiques.

4. Procédé d'obtention d'un engrais liquide à partir de biomasse végétale, selon les revendications 1 ou 2, **caractérisé en ce que** le glycol de faible poids moléculaire est choisi parmi le monoéthylène glycol, le propylène glycol et le diéthylène glycol.

5. Procédé d'obtention d'un engrais liquide à partir de biomasse végétale, selon la revendication 4, **caractérisé en ce que** le glycol de faible poids moléculaire est le monoéthylène glycol.

6. Procédé d'obtention d'un engrais liquide à partir de biomasse végétale, selon la revendication 2, **caractérisé en ce que** l'épaississant à base de polysaccharides est la gomme de xanthane ou la gomme de guar.

7. Procédé d'obtention d'un engrais liquide à partir de biomasse végétale, selon la revendication 1, **caractérisé en ce que** les composants suivants en masse sont utilisés : biomasse végétale 200 à 800 g, agent mouillant à base de polyamine 10 à 60 g, dispersant à base de substances humiques 50 à 100 g, monoéthylène glycol 10 à 30 g, agent anti-mousse 0,2 à 0,5 g, eau jusqu'à 1 000 g.
